# NEW EUROPEAN PATENT SPECIFICATION

(11) **EP 2 165 608 B2**
(45) Date of publication and mention of the opposition decision: **24.06.2020**
(45) Mention of the grant of the patent: 30.04.2014
(21) Application number: 09170938.6
(22) Date of filing: 22.09.2009
(51) Int. Cl.: A23C 19/032, A23C 19/068, A23C 19/05

(54) **Method for producing cheese using a nisin-producing direct vat set culture**
Verfahren zur Käseherstellung mithilfe der Nisinproduktion direkt aus der Bottichkultur
Procédé de fabrication de fromage utilisant une culture de décantation directe en cuve produisant de la nisine

(30) Priority: 22.09.2008 EP 08164778
(43) Date of publication of application: 24.03.2010
(60) Divisional application: 14165957.3
(73) Proprietor: CSK Food Enrichment B.V., 8938 AS Leeuwarden (NL)
(72) Inventor: Meijer, Willem Cornelis, 6712 HA Ede (NL); Haarman, Martinus Gerardus Maria, 9035 VC Dronrijp (NL); Burghout, Herman Frank, 5241 XT Rosmalen (NL); Penders, Johannes Antonius, 5324 AV Ammerzoden (NL)
(74) Representative: HGF Limited

(56) References cited:
- EP-A1- 1 273 237
- EP-A1- 1 915 911
- EP-A2- 1 060 745
- EP-A2- 1 216 619
- BOUKSAIM M ET AL: "Effects of mixed starter composition on nisin Z production by Lactococcus lactis subsp. lactis biovar. diacetylactis UL 719 during production and ripening of Gouda cheese", INTERNATIONAL JOURNAL OF FOOD MICROBIOLOGY, ELSEVIER SCIENCE PUBLISHERS, AMSTERDAM, NL, vol. 59, no. 3, 1 January 2000 (2000-01-01), pages 141-156, XP002512788, ISSN: 0168-1605, DOI: DOI:10.1016/S0168-1605(00)00295-6
- ROBERTS R F ET AL: "USE OF A NISIN-PRODUCING STARTER CULTURE SUITABLE FOR CHEDDAR CHEESE MANUFACTURE1", JOURNAL OF DAIRY SCIENCE, AMERICAN DAIRY SCIENCE ASSOCIATION, US, vol. 75, no. 9, 1 September 1992 (1992-09-01), pages 2353-2363, XP000305309, ISSN: 0022-0302

## Description

### Field of the invention

The present invention relates to a method for producing a shaped curd mass, as well as to a method for producing a semi-hard or hard cheese. The invention also relates to a shaped curd mass and to a semi-hard or hard cheese *per se.* The present shaped curd mass and cheese have a sodium chloride content and a nisin content. In particular the invention concerns a shaped curd mass and cheese having a sodium chloride content that is relatively low.

### Background of the invention

Nisin-producing cultures and their use in cheese-making are known.

EP1273237 relates in one aspect to a process for producing a fermented food or feed product, wherein the process comprises a fermentation step using one or more nisin-resistant bacterial strains in the presence of nisin. Preferably, the process comprises a fermentation step in which a starter culture is used that comprises (a) a nisin-producing L. lactis strain; and (b) one or more nisin-resistant bacterial strains. Preferably, in addition to the nisin-producing strain of L. lactis, one or more nisin-immune strains of L. lactis may further be included in the starter culture. Herein, the nisin-producing L. lactis strain is capable of producing a nisin and is immune to nisins, whereby the capability to produce nisin and the nisin-immunity are encoded by genetic information that is present on, or derived from a transposon, such as e.g. Tn5276. Preferably the fermented product is a dairy product, silage or a fermented meat product. The dairy product preferably is cheese, of which non-Gouda cheeses are preferred. Most preferred are cheeses of which the production involves fermentation with a non-L. lactis bacterium. EP1273237 further recites that a "[....] successful application of nisin concerns its use in the production of processed cheese and spread cheese to avoid outgrowth of Clostridia."

Bouksaim et al., in "Effects of mixed starter composition on nisin Z production by L. lactis subsp. lactis biovar. diacetylactis UL 719 during production and ripening of Gouda cheese", International J. of Food Microbiol. 2000, 59, 141-156, disclose a starter culture system producing both acid and nisin in milk for manufacture of Gouda cheese. The culture system comprises an *overnight* nisin-producing UL719 culture in combination with a Flora Danica starter.

### Summary of the invention

By employing one or more of the nisin-immune cultures and the nisin-producing culture described in EP1273237 in concentration ranges as indicated therein, all as a bulk starter, it has been found that the method according to EP1273237 may be difficult to control in terms of nisin production and/or acidification. In particular, nisin production in and/or acidification of the curds may not be sufficient in every cheese making batch, especially in a non-laboratory environment such as an industrial or artisanal cheese-making environment.

Furthermore, the method according to EP1273237 appeared less suitable to produce a traditional Gouda-type cheese, having a characteristic clean and rich flavour which preferably does not comprise distinct nutty and/or sweet notes. Although EP1273237 mentions that "The combination of Dairysafe^{™} TC17 and 13M, used in about equal amounts, allows for the production of high quality Gouda cheese and produces in situ about 150 - 400 IU nisin per gram cheese", it has been found that the quality may pertain to the texture of the cheese, but less so to its taste and/or flavour.

It is noted that the nisin-immune bacteria of *Lb. delbrueckii* subsp. *bulgaricus, a P. freudenreichii* subsp. *freudenreichii, a S. thermophilus, a Lb. crispatus*, a *Lb. plantarum* and a *Lb.sanfrancisco* may not be suitably employed as acidifying starter cultures when used on their own, optionally in combination with TC-17.

It is also remarked that in the cheese-making examples disclosed in EP1273237, the bacterial strains are combined and dosed together into the cheese milk. These examples do not explicitly disclose whether the strains are used as a bulk starter or as a direct vat starter.

The method according to Bouksaim *et al.* may also be difficult to control, particularly so as to reproducibly provide sufficient nisin production and adequate acidification of the curds, especially in an industrial setting. Furthermore, the method according to Bouksaim *et al.* may yield Gouda-type cheese having a bland flavour, which lacks the cleanliness and complexity of a traditional Gouda-type cheese. It is also noted that the method according to Bouksaim *et al.* employs a relatively high dosage of Flora Danica starter culture (*i.e*. 1.4 %).

In one aspect, the present invention aims to provide an alternative and preferably improved culture system which provides for a reproducible production of sufficient lactic acid and nisin in curds during cheese manufacture.

This object is met by providing, in a first aspect, a method to produce a shaped curd mass comprising a nisin content and a sodium chloride content from a cheese milk composition, the method comprising
a. providing a nisin-intolerant bulk starter; and
b. mixing milk, a coagulant, the nisin-intolerant bulk starter, and a nisin-producing direct vat set culture in an amount of at least 10⁴ cfu/ml, preferably in an amount of at least 1.0*10⁵ cfu/ml of the milk, to provide the cheese milk composition.
wherein the risin-producing direct vat set culture still experiences a lag time after said mixing, and/or
wherein the risin-producing direct vat set culture is supplied as a lyophylized or a frozen culture.

This method preferably further comprises the steps of
c. allowing the cheese milk composition to coagulate to provide curds;
d. optionally, washing the curds;
e. pressing the curds to produce a shaped curd mass; and
f. salting the shaped curd mass in brine to produce the shaped curd mass comprising the sodium chloride content and the nisin content.

Accordingly, a shaped curd mass is obtained comprising a sodium chloride content which ranges between 0.5 and 5 wt.% based on dry weight of the shaped curd mass, and comprising a nisin content of more than 10 IU/g, preferably of more than 40 IU/g. It is especially preferred that the shaped curd mass comprises a nisin content which ranges between 10 and 1200, more preferably between 10 and 800 IU/g, yet even more preferably of between 40 and 750 IU/g, most preferably of between 50 and 400 IU/g of the shaped curd mass.

The present method has a further advantage in that a very good acidification rate of the curds may be obtained, especially in that a sufficiently low pH value in the curds may be obtained already after 6 hours from providing the cheese milk composition in step (b.), said pH value preferably ranging between 5.0 and 5.8 more preferably ranging between 5.1 and 5.7, Additionally or alternatively, the presence of the nisin-producing direct vat set culture preferably causes the pH of curds obtained after 6 hours from providing the cheese milk composition in step (b.) to increase by not more than 0.2 units as compared to the pH of curds obtained under otherwise identical conditions but in the absence of the nisin producing direct vat set culture.

The sodium chloride content may preferably be varied by adapting the duration of the brining time and/or by varying the volume/surface ratio of the shaped curd mass, as is known to the person skilled in the art. For example, a curd mass shaped as a typical Gouda wheel and having a weight of about 12 kg may need a brining time of about 70 hours in order to obtain in step (f.) a shaped curd mass having a sodium chloride of about 3.5 wt.% with respect to the dry weight of the curd mass, which is considered a "normal" sodium chloride content, especially for a shaped curd mass which is to be further ripened as a semi-hard or hard cheese, especially a Gouda-type cheese. The cheese milk composition in (b.) preferably does not contain added cystathionine-β-lyase overproducing bacteria, especially recombinant cystathionine-β-lyase overproducing bacteria. It is further preferred that said cystathionine-β-lyase overproducing bacteria are not inducible by nisin. Said cystathionine-β-lyase overproducing bacteria are preferably defined according to EP 1 216 619 A2, which is incorporated by reference herein.

The nisin content of the shaped curd mass obtained in step (f.) may preferably be varied by adjusting the amount of the nisin-producing direct vat set culture within the indicated ranges, wherein preferably the amount of the nisin-producing direct vat set culture in (b.) is at least 1.0*10⁵ cfu/ml of the milk, more preferably at least 2.0*10⁵ cfu/ml of the milk. The nisin-intolerant bulk starter is added in usual amounts. Generally speaking, the higher the amount of the nisin-intolerant bulk starter relative to the amount of the nisin-producing direct vat set culture, the lower the nisin content comprised by the shaped curd mass obtained in (f.), and *vice versa*. Excellent results in terms of nisin production, acidification rate, and economy of use of both nisin-intolerant bulk starter and of the nisin-producing direct vat set culture are obtained for the amount of the nisin-producing direct vat set culture employed in (b.) ranging between 1.0*10⁵ and 1.0*10⁷, more preferably of between 1.0*10⁵ and 1.0*10⁶, most preferably of between 2.0*10⁵ and 1.0*10⁶ cfu/ml of the milk, and for the amount of the nisin-tolerant bulk starter ranging between 0.25 and 1.0 % (v/v), more preferably between 0.3 wt.% and 0.8 wt.% with respect to the weight of the milk.

It is preferred that the cheese milk composition provided in (b.) - preferably immediately after mixing - comprises less than 10 IU, more preferably less than 5 IU, even more preferably less than 1 IU, most preferably less than 0.5 IU or even less than 0.1 IU per ml of the cheese milk composition. As a consequence of said low initial nisin levels, very good acidification rates may be reproducibly achieved so as to allow a robust industrial cheese making process. Moreover, especially if the nisin intolerant bulk starter is a nisin-intolerant (preferably mesophilic) mixed strain bulk starter, the bacterial population of said mixed strain bulk starter may favourably start growing and/or start producing lactic acid in the cheese milk composition without significant (selective) inhibition of one or more strains to occur already in the beginning of step (b.). Said preferred low initial amounts comprised by the cheese milk composition may be conveniently achieved by keeping the dosage of the nisin-producing direct vat set culture in (b.) below 200 g of said culture per 1000 kg of the milk, preferably in the range of between 1-200 g, more preferably of between 5-100 g per 1000 kg of the milk. At such dosages of the nisin-producing direct vat set culture, so-called "carry-over" of any nisin which may be present in said culture and which may be dosed into the cheese milk composition together with the nisin-producing direct vat set culture may be kept to a minimum. Such preferred dosages may be conveniently achieved by employing, for example, commercially available nisin-producing direct vat set cultures (such as D100, *ex* CSK Food Enrichment), which cultures are typically supplied at about 10¹⁰ cfu per gram of culture.

Preferably, the shaped curd mass comprising the sodium chloride content and the nisin content is produced according to a Gouda-type protocol.

The present invention also relates to a method for producing a semi-hard or hard cheese comprising ripening the shaped curd mass comprising the sodium chloride content and the nisin content; said shaped curd mass is preferably ripened under conditions which are typical for a Gouda or Gouda-type cheese. The present invention especially relates to a method to produce a semi-hard or hard cheese comprising a sodium chloride content and a nisin content, the method comprising steps (a.) - (f.) of the method to produce the shaped curd mass comprising the sodium chloride content and the nisin content, and further comprising ripening the shaped curd mass comprising the sodium chloride content and the nisin content during a ripening time of between 20 - 500 days, and under ripening conditions, comprising a ripening temperature of between 4 and 25 °C, more preferably of between 7-20 °C. Preferably, the shaped curd mass comprising the sodium chloride content and the nisin content is ripened according to a Gouda-type protocol.

Furthermore, it has been recognized for the first time that a shaped curd mass having a relatively low sodium chloride content (especially of from 1-3 wt.% based on dry weight of the cheese), is very sensitive to contamination by unwanted gram-positive bacteria, especially *Propionibacterium* spp. and/or *Clostridium* spp. and that as a result, the shaped curd mass may develop red discolouration and/or undesired holes during ripening. The shaped curd mass having the relatively low sodium chloride content may be particularly vulnerable to said contamination during its production in an industrial setting, even if the curds are washed in step (d.), and even if this washing step is carried out in the presence of a nitrate salt. Especially contamination by *Propionibacterium* spp. may remain a problem.

Advantageously, it has been found that said shaped curd mass may be suitably and robustly protected against bacterial contamination, especially against contamination with *Propionibacterium* spp. and/or *Clostridium* spp., by providing the shaped curd mass with a nisin content which ranges between 10-1200 IU/g, more preferably between 10-800 IU/g, even more preferably between 50-400 IU/g of the shaped curd mass.

The disclosure also relates to a semi-hard or hard cheese obtainable by ripening the present shaped curd mass, preferably at a ripening temperature of between 4 and 25 °C. and, alternatively or more preferably additionally, during a ripening time of preferably between 20 - 500 days, or more preferably between 25 - 300 days. The cheese comprises approximately the same chloride content as the corresponding shaped curd mass, *i.e.* preferably of between 1 and 3 wt.%, more preferably of between 1 and 2.75 wt.%, even more preferably of between 1.75 and 2.75 wt.% based on dry weight of the cheese. The semi-hard or hard cheese comprises a nisin content of at least 10 IU/g of cheese. Accordingly, this cheese may advantageously remain protected against unwanted bacterial contamination, especially against unwanted blowing or discolouration, and particularly against unwanted blowing or discolouration due to contamination with *Propionibacterium* spp. and/or *Clostridium* spp.

The methods according to the invention are specially adapted for producing said shaped curd mass and said cheese, respectively.

### Detailed description of the invention

### Definitions

The term "nisin-intolerant bulk starter" relates to a bulk starter comprising lactic acid bacteria which, when added to pasteurised milk at about 1 wt.% with respect to the weight of the milk, in the presence of nisin at 10 units/ml or more, is incapable of reducing the pH of the milk by at least 1 pH unit during incubation of the milk for 6 hours at a temperature of 30 °C. Said bulk starter, when added to the pasteurised milk at about 1 wt.%, during incubation of the milk for 6 hours at a temperature of 30 °C in the absence of detectable amounts of nisin, is capable to reduce the pH of the milk by at least 0.5 pH units, preferably at least 1 pH unit. The nisin-intolerant bulk starter is not a nisin-producing bulk starter, i.e. the nisin-intolerant bulk starter is preferably not capable to produce more than 100 units, more preferably is not capable to produce more than 10 units of nisin per ml of pasteurised milk during incubation for 8 to 40 hours in said milk at 30-42 °C which has been inoculated with the bulk starter in an amount of about 0.5 to 1 wt.% of the bulk starter with respect to the weight of the milk.

Herein, the term "bulk starter" has its ordinary meaning and relates to a starter culture comprising lactic acid bacteria, which starter culture is prepared by inoculating a suitable medium with a mother culture, and allowing the mother culture to grow in the medium. Said mother culture comprises one or more genera of lactic acid bacteria, preferably in an amount of at least 10⁷ cfu/ml (overall count), most preferably in an amount of at least 10¹⁰ cfu/ml (overall count); the overall cell count of the mother culture may be lower than 10¹³ cfu/ml or 10¹² cfu/ml. The medium is typically inoculated with about 125 ml of the mother culture per 1000 litres of the medium. The medium usually comprises milk and/or two or more medium ingredients selected from the group consisting of a carbon source (preferably lactose) and a growth-promoting additive. The growth promoting additive may be suitably selected as a peptide (for example as peptone and/or tryptone). The bulk starter is considered ready for use if the mother culture has been allowed to grow until the pH of the medium becomes inhibitory to the culture, and cell growth stops (usually below pH 5.5 and preferably below pH 5.0; if, for example, the medium is milk, typically at around pH 4.6); this usually takes up to 20 hours, or preferably 16 hours after inoculation of the medium with the mother culture when fermented at 21°C. At this stage, the bulk starter preferably has a total cell count of between 10⁶-10¹⁰ cfu/ml.

In the present description, the bulk starters will be named after the mother cultures from which they may be prepared and vice versa, unless otherwise indicated.

The term "nisin-producing direct vat set culture" relates to a direct vat set culture which is capable, optionally in the presence of a yeast extract, to produce at least 10, more preferably at least 100 units of nisin per ml of (pasteurised) milk during incubation of said milk for 8 hours at 30 °C, wherein the milk has been inoculated with the direct vat set culture at about 10⁵ - 10⁷ cfu/ml, preferably at about 10⁶ cfu/ml. This inoculation density corresponds to a dosage, per 100 kg of the milk, of about 1 - 100 g, preferably of about 10 g of the nisin-producing direct vat set culture having a total cell count of *about* 10¹⁰ cfu/g.

The term "flavour adjunct culture" is known in the art. In an embodiment, the flavour adjunct culture is not provided as a nisin-producing bulk starter, since this might disturb the favourable population dynamics of the nisin-intolerant bulk starter and of the nisin-producing direct vat set culture. Herein, a nisin-producing bulk starter preferably relates to a bulk starter which is capable to produce at least 10 units, more preferably at least 100 units of nisin per ml of pasteurised milk during incubation for 8 to 40 hours in said milk at 30-42 °C which has been inoculated with the bulk starter in an amount of about 0.5 to 1 wt.% of the bulk starter with respect to the weight of the milk.

The term "lactic acid bacteria" is known to the person skilled in the art and may preferably be defined as Gram positive, non-spore-forming, anaerobic, catalase negative cocci or rods forming lactic acid as an end product of their carbohydrate metabolism. Well-known genera include *Bifidobacterium, Carnobacterium, Enterococcus, Lactobacillus, Lactococcus, Lactospaera, Leuconostoc, Oenococcus, Pediococcus, Streptococcus, Vagococcus* and *Weissella*. During their growth, lactic acid bacteria may form metabolites other than lactic acid. These metabolites may contribute to the desired sensory properties of the product. Some of these metabolites may include, for instance, diacetyl, acetaldehyde, and an exopolysaccharide.

In the present description "mesophilic" is used to indicate lactic acid bacteria which exhibit an optimum growth at below about 33 °C, preferably at between *about* 15 and *about* 33 °C. "Thermophilic" is used to indicate lactic acid bacteria which exhibit an optimum growth at between about 33 °C and about 45 °C, more in particular between 37 °C to 45 °C.

The expression "brine" preferably relates to a concentrated or, more preferably saturated, aqueous solution of NaCl. Accordingly, the expression "sodium chloride" is preferably read as NaCl. The NaCl content in wt.% comprised by a shaped curd mass or by a cheese may be preferably determined as a Na⁺ content in wt.%, wherein the determined Na⁺ content should be multiplied by a factor of (1/0.3933) to arrive at the NaCl content of the shaped curd mass or cheese. A standard Gouda-type cheese has a sodium chloride content of approximately 3.5 wt.% (as NaCl), based on dry weight of the cheese. Such a standard Gouda-type cheese may thus be analysed to have a sodium content of 1.38 wt.% (as Na⁺) based on dry weight of the cheese. In an embodiment, up to 50 wt.% of the sodium chloride comprised by the brine may be replaced with potassium chloride, so that the sodium chloride content of a shaped curd mass after brining may be further reduced. Accordingly, the expression "sodium chloride" may be read as "NaCl + KCl" wherein the relative amount of NaCl, by weight, is equal to or higher than the relative amount of KCl, by weight. The content of "NaCl + KCl" of a shaped curd mass or of a cheese may be suitably analysed as the sum of the Na⁺ content and of the K⁺ content of the shaped curd mass or cheese.

In the expression "wt.% [of an ingredient] based on dry weight of a composition" the weight percentage [of the ingredient] is specified with regard to the solid matter content of the composition. Said weight percentage preferably relates to the weight percentage of the ingredient with respect to the weight of the composition, excluding its water content. The "wt.% [of an ingredient] based on dry weight of a composition" may for example be obtained by determining the weight percentage of the ingredient in the dehydrated composition, and specifying said weight percentage with respect to the weight of the dehydrated composition.

The expression "nisin" may be read as "a nisin" and may relate to any nisin, for example relate to nisin A or nisin Z. Preferably, "nisin" relates to nisin A. Preferably "a nisin" relates to nisin A.

In an embodiment of the present invention, the expression "nisin" may be read as "a type I bacteriocin". A type I bacteriocin is known to the person skilled in the art, and preferably relates to a lantibiotic or to a lanthionine or methyllanthionine containing peptide bacteriocin. The lanthionine or methyllanthionine containing peptide bacteriocin preferably has a molecular weight < 10 kDa.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### Nisin-intolerant bulk starter

Providing a nisin-intolerant bulk starter preferably comprises freshly preparing said bulk starter before use in step (b.) and preferably coincides with mixing with milk as defined in step (b.). Preferably, the nisin-intolerant bulk starter is used within 72 hours after preparation, more preferably within 48 hours after preparation, most preferably within 24 hours after preparation.

It is preferred that the nisin-intolerant bulk starter comprises one or more strains selected from the *Lactococcus* family.

The nisin-intolerant bulk starter is preferably mesophilic. Additionally or alternatively, the nisin-intolerant bulk starter preferably comprises or more preferably consists of a so-called undefined bulk starter. An "undefined bulk starter" is known in the art and may relate to a bulk starter obtainable by fermenting an undefined mother culture in milk, wherein the undefined mother culture is preferably free of Enterobacteria and/or *Listeria* spp. Herein, the undefined mother culture and the undefined bulk starter comprise a complex flora of different lactic acid bacteria, the complexity of which may represent that of (preferably raw) milk which has been acidified by exposure to air, with the proviso that the milk is preferably free of Enterobacteria and/or *Listeria* spp. The term "undefined starter" is especially preferably defined as a "mixed strain starter", which term is known in the art and is defined in Chapter 13.5 (especially on p. 387) of Dairy Science and Technology, P. Walstra et al., 2nd Edition, CRC/Taylor and Francis, 2006, which is incorporated by reference herein. An especially preferred nisin-intolerant bulk starter may be selected as a nisin-intolerant mesophilic undefined bulk starter (or alternatively, as a nisin-intolerant mesophilic mixed strain bulk starter), which may be suitably obtained as a commercially available mesophilic undefined bulk starter. The person skilled in the art will have very little difficulty in selecting a known mesophilic undefined bulk starter as a nisin-intolerant bulk starter, as commercially available mesophilic undefined bulk starters known to date are nisin-intolerant bulk starters. An especially preferred nisin-intolerant bulk starter is a nisin-intolerant mesophilic undefined bulk starter for Gouda cheese. The nisin-intolerant bulk starter may be preferably chosen as one or more mesophilic undefined bulk starters selected from the group of Flora Danica, Bos, HB-26, Fr18, Fr19 and A. Surprisingly, it has been found that notwithstanding the use of the nisin-producing direct vat set culture, the use of one or more of said mesophilic undefined bulk starters in the methods according to the invention may lead to the production of a shaped curd mass comprising a sodium chloride content and a nisin content, which shaped curd mass may favourably develop a complex flavour during subsequent ripening. This is surprising because the presence in a cheese milk composition of even small amounts of nisin is considered detrimental to the outgrowth of a mesophilic undefined bulk starter in the cheese milk composition *per se,* let alone that the natural biodiversity of said undefined bulk starter would be allowed to fully develop in such a cheese milk composition.

It has been found that particularly good results may be obtained when the nisin-intolerant bulk starter is mixed with the milk in step (b.) in an amount ranging between 0.1-2 wt.% with respect to the milk. Even more preferably, the amount of the nisin-intolerant bulk starter employed in step (b.) ranges between 0.2 - 1.5 wt.%, yet even more preferably between 0.25-1.0 wt.%, most preferably between 0.4 - 1.0 wt.% with respect to the weight of the milk. It has been found that accordingly, an especially favourable balance of nisin production in and acidification of the shaped curd mass, especially of the shaped curd mass comprising the sodium chloride content and the nisin content, may be obtained. In an especially favourable embodiment, these amounts pertain to the one or more preferred mesophilic undefined bulk starters. These preferred amounts of the nisin-intolerant bulk starter are relatively low, especially considering the presence of a nisin-producing culture. Advantageously, the methods according to the invention may be economically performed, especially with regard to the utilization of resources to provide the nisin-intolerant bulk starter. Especially economically, the nisin-intolerant bulk starter may also be employed in step (b.) in an amount ranging between 0.3-0.8 wt.% with respect to the weight of the milk.

### Milk

The milk preferably comprises milk fat in an amount of 0.05 - 2 wt.%, preferably in an amount of 0.2 - 1.5 wt.% with respect to the weight of the milk. The protein content of the milk is preferably around 3.0 - 3.6 wt.% with respect to the weight of the milk, or about equal to the natural protein content of the milk. Preferably, the fat:protein ratio of the milk ranges below 0.7, more preferably below 0.6. The fat to protein ratio preferably ranges above 0.1. Accordingly, a reduced-fat cheese having a good flavour and texture may be obtained according to the present method.

### Coagulant

In order to obtain curds a coagulant is required. In the art commonly applied coagulants may be used, such as an organic acids, e.g. citric acid, or preferably a microbial coagulant or (fermentation produced) chymosin or even more preferably (calf) rennet. Suitable rennet preparations for industrial processes are known to those skilled in the art and are commercially available.

### Nisin-producing direct vat set culture

The nisin-producing direct vat set culture is preferably supplied as a lyophilized or a frozen culture, and most preferably as frozen pellets.

The nisin-producing direct vat set culture is preferably a defined single-strain or defined mixed-strain culture, and further preferably comprises a spp. of *Lactococcus lactis.* A suitable single-strain nisin-producing direct vat set culture of a *Lactococcus lactis* spp. may be obtained as, for example, D-100, B625, TC-17 or as IM1 (ex CSK Food Enrichment, The Netherlands). Each of D-100, B625, TC-17 and IM1 comprise a single-strain *Lactococcus lactis* spp. and have a total cell count of *about* 10¹⁰ cfu/g. Another suitable nisin-producing direct vat set culture may be obtained as, for example, BS-10 from Chr. Hansen.

The nisin-producing direct vat set culture is preferably added directly to the milk in step (b.). The nisin-producing direct vat set culture may alternatively be mixed with an aqueous solution before its addition to the milk in step (b.), for example to allow dissolution and/or to allow a homogenous mixing of the culture in the cheese milk composition obtained in step (b.). The aqueous solution may be selected as water, milk or a ready-for-use bulk starter. A frozen nisin-producing direct vat set culture may also be allowed to melt prior to its addition to the milk in step (b.). Prior to its addition to the milk in step (b.), the nisin-producing direct vat set culture may even be incubated with a growth medium (such as milk) for a short period of time, which period should not exceed the lag time of the nisin-producing direct vat set culture. The term "lag time" is known to the person skilled in the art and for (nisin-producing) direct vat set cultures is usually in the order of a few hours.

Very good results, especially regarding nisin production in the shaped curds mass, may be obtained when the nisin-producing direct vat set culture is mixed with the milk in step (b.) in an amount of at least 10⁵ cfu/ml of the milk, more preferably in an amount of at least 10⁶ cfu/ml of the milk. The required corresponding dosage of the nisin-producing direct vat set culture may be suitably calculated using the total count of viable bacteria comprised by the nisin-producing direct vat set culture. For commercially available direct vat set cultures, the total count of viable bacteria may be suitably specified by the supplier. Otherwise, or when in doubt, the total count of viable bacteria may be determined using known techniques. As another example, a single-strain nisin-producing direct vat set culture may be commercially supplied at "at least 10¹⁰ cfu/g", which is a rather typical value, especially for a (single-strain) frozen culture. It follows that to inoculate milk with said culture in an amount of at least about 10⁶ cfu/ml, said culture should be mixed with the milk in an amount of about 10 g of the culture per 100 litre of the milk, or at about 0.01 % (w/v).

There may be practically no upper limit to the amount of the nisin-producing direct vat set culture which may be employed. Without being bound to theory, it is believed that the desired balance may be suitably established by the combined use of the nisin-intolerant bulk starter and the nisin-producing direct vat set culture in step (b.). However, for several reasons including cost efficiency (associated with the use of the nisin-producing culture) and/or consumer acceptance (associated with the nisin level in the cheese, which may preferably not exceed 1200 IU/g or more preferably 800 IU/g), the nisin-producing direct vat set culture is preferably employed in an amount of 10⁹ cfu/ml or less, more preferably in an amount of 10⁸ cfu/ml or less. Optimal results in terms of nisin production and acidification in the (shaped) curd (mass) may be obtained when the nisin-producing direct vat set culture is employed in step (b.) in an amount of 10⁵-10⁸ cfu/ml, more preferably at 10⁵-10⁷ cfu/ml (especially at 1.0*10⁵ - 1.0*10⁷ cfu/ml), most preferably at around 1.0*10⁵-1.0* 10⁶ cfu/ml. These upper limits and/or ranges are especially preferred if in step (f.) a brining time of at least 1 hour, more preferably of at least 5 hours is employed.

In an especially preferred embodiment, the nisin-producing direct vat set culture is proteinase negative, whilst the nisin-intolerant bulk starter comprises proteinase positive lactic acid bacteria, preferably at a total count of at least 5% of the total population of bacteria comprised by said bulk starter. Accordingly, the population dynamics of all lactic acid bacteria comprised by the cheese milk composition, the curds, the shaped curd mass, and/or the shaped curd mass comprising the sodium chloride content and the nisin content may be further optimized with respect to acidification and nisin production. According to this embodiment, the nisin-producing direct vat set culture is preferably selected as one or more cultures selected from the group consisting of D100, TC-17 or B625 (all *ex* CSK Food Enrichment).

In an embodiment, the nisin-producing direct vat set culture may be partially or fully replaced by an appropriate amount of an encapsulated nisin preparation, wherein the encapsulated nisin preparation optionally together with the nisin-producing direct vat set culture is capable to provide 50, more preferably 100 units of (biologically available) nisin per ml of pasteurised milk after incubation of the milk for 8 hours at 30 °C with the encapsulated nisin preparation and optionally the nisin-producing direct vat set culture. The encapsulated nisin preparation preferably relates to encapsulated nisin *per se,* or to an encapsulated nisin producing culture, or to a mixture of both. The encapsulated nisin preparation preferably comprises nisin and/or nisin-producing cultures which are encapsulated in a largely water-insoluble shell. The shell preferably comprises a water-in-oil emulsifier and/or a coacervate.

### Flavour adjunct culture

It has been advantageously found that the use of a flavour adjunct culture may favourably contribute to the flavour, taste and/or texture of the cheese. This especially applies to a semi-hard or hard cheese having a fat content of between 5 and 35 wt.% based on dry weight of the cheese, and a sodium chloride content of between 1 and 3 wt.%, even more preferably of between 1 and 2.75 wt.%, most preferably of between 1.75 and 2.75 wt.% based on dry weight of the cheese. The combination of the nisin-producing direct vat set culture, the nisin-intolerant bulk starter and the flavour adjunct culture for producing said cheese, which has a relatively low sodium chloride content and a relatively low fat content (and hence a relatively high protein content), may provide for especially favourable proteolytic properties to occur during ripening of said cheese, which after ripening of the cheese for the desired ripening time may provide for both a favourable texture and a pleasant taste of the cheese.

The flavour adjunct culture may be selected as any thermophilic or mesophilic flavour adjunct culture, or as a mixture thereof. It is especially preferred that the flavour adjunct culture is a thermophilic flavour adjunct culture. The flavour adjunct culture is preferably a defined single-strain adjunct culture or a defined mixed-strain adjunct culture. Herein, the term " defined mixed-strain culture" is known in the art and is preferably defined as a "(defined) multiple-strain culture", that is, a defined mixture of pure cultures of a few strains of different species of bacteria or of different strains of one species. A preferred single-strain adjunct culture may for example be commercially obtained as L200, L300, L400, L600, L700 and/or as L800, *ex* CSK Food Enrichment or as LH-B01 or LH-B02 (*ex* Chr. Hansen). The flavour adjunct culture may be added in a usual amount. For example, when the flavour adjunct culture is added as a direct vat set starter (as frozen pellets), it may be preferably mixed with the milk in step (b.) in an amount of 0.005 - 0.5 wt.% with respect to the weight of the milk.

A preferred thermophilic flavour adjunct culture may be chosen as one ore more species selected from the group consisting of *Streptococcus thermophilus, Enterococcus faecium, Lactobacillus delbrueckii* spp. *bulgaricus, Lacto-bacillus delbrueckii* spp. *lactis, Lactobacillus helveticus, Lactobacillus acidophilus, Lactobacillus casei* and *Bifidobacterium spp.*

In an especially preferred embodiment, the flavour adjunct culture excludes a *Propionibacterium* spp. and/or *Clostridium* spp. It has been observed that the nisin-producing direct vat set culture may be very effective in inhibiting and/or killing off propionibacteria (see below).

A preferred thermophilic flavour adjunct culture comprises one or more strains of *Lactobacillus acidophilus* and/or of *Lactobacillus helveticus*, either alone or in combination, and optionally further combined with a *Streptococcus thermophilus*. An especially preferred thermophilic flavour adjunct culture is selected as a *Lactobacillus acidophilus* and/or as a *Lactobacillus helveticus*, optionally combined with a *Streptococcus thermophilus*. An especially preferred thermophilic flavour adjunct culture comprises one or more subspecies of *Lactobacillus helveticus*; such a preferred flavour adjunct culture may be conveniently obtained, for example as L100 (*ex* CSK Food Enrichment), as APS13 (which is identical with C97.1 or with APS NIZOSTAR, *ex* CSK Food Enrichment) or as LB 40 (Lactobacillus helveticus; CBS 114075).

In a preferred embodiment, the flavour adjunct culture in step (b.) is mixed with the milk as a bulk starter. According to this embodiment, the amount of the flavour adjunct culture mixed with the milk in step (b.) is preferably 0.1 - 3.0 wt.% or more preferably 0.5-2,5 wt%, most preferably 0.5-2 wt.% with respect to the weight of the milk. According to this embodiment, it is most preferred that in step (b.) the sum of the amounts of the nisin-intolerant bulk starter and of the flavour adjunct culture, when provided as a bulk starter, ranges between 0.4 and 4 wt.% with respect to the weight of the milk, even more preferably between 0.5 and 3 wt.% with respect to the weight of the milk, most preferably between 0.6 and 2 wt% with respect to the weight of the milk.

A preferred mesophilic flavour adjunct culture is selected as one or more strains of *Lactococcus lactis* spp. *lactis, Lactococcus lactis* spp. *cremoris, Lactococcus lactis* spp. *lactis* biovar *diacetylactis, Leuconostoc mesenteroides* and *Pediococcus pentosaceus* and *Lactobacillus sakei*. An especially preferred mesophilic flavour adjunct culture is chosen as one or more cultures selected from the group consisting of B33, X100, CR322, CR322, CR213, CR319, CR312. Herein, B33 and X100 may be available from CSK Food Enrichment; the CR-strains may be available from Chr. Hansen.

### Coagulation to provide curds

Following procedures known *per se* the composition mixed in step (b.) is allowed to coagulate, preferably followed by cutting and/or stirring to provide curds and whey, preferably followed by separating the curds from whey so as to obtain curds.

### Washing the curds

In an embodiment, the method comprises washing the curds in step (d.), preferably in the presence of a nitrate salt and/or lysozyme. The nitrate salt and/or the lysozyme may preferably be employed as an aqueous solution, and preferably in a usual amount and concentration.

Washing the curds in step (d.) preferably comprises washing the curds using a washing liquor. The nitrate salt is preferably dosed to the washing liquor in a total amount of 0.1 - 20 g (as NaNO₃) per 100 1 of the cheese milk composition (b.); the lysozyme is preferably dosed to the washing liquor in a total amount of 1-10 g of lysozyme per 100 1 of the cheese milk composition under (b.)

In addition to or alternatively to dosing the nitrate salt/and/or the lysozyme to the washing liquor, the nitrate salt and/or the lysozyme may be preferably added to the cheese milk composition under (b.); according to this embodiment, the nitrate salt is preferably added in step (b.) to the cheese milk composition in a total amount of 0.1 - 20 g (as NaNO₃) per 100 1 of the cheese milk composition; the lysozyme is preferably added in step (b.) to the cheese milk composition in a total amount of 1-10 g of lysozyme per 100 1 of the cheese milk composition.

The presence of the nitrate salt and/or the lysozyme may further help in preventing contamination against unwanted gram-positive bacteria, especially *Propionibacterium* spp. and/or *Clostridium* spp., as it has been observed that for producing a shaped curd mass comprising a sodium chloride content of between 1-3 wt.% based on dry weight of the cheese, employing a washing step (d.) using a washing liquor comprising a nitrate salt in a usual concentration would not always sufficiently protect the shaped curd mass against said unwanted contamination unless the nisin-producing direct vat set starter were used.

### Pressing the curds

Following the step of obtaining the curds that are optionally washed, and prior to the brining step, the curds are preferably drained, and then pressed using known means to produce a shaped curd mass.

In one embodiment the shaped curd mass is flat cylindrical or alternatively has a block shape. The flat cylindrical shaped curd mass preferably has a volume/surface ratio of 0.01-0.15 m, more preferably of between 0.03 - 0.08 m. The shaped curd mass having a block shape preferably has a volume/surface ratio of 0.005 - 0.10 m, more preferably of 0.01 - 0.05 m. Herein, the volume is calculated in m³ and the surface is calculated in m². Alternatively, or preferably additionally, the shaped curd mass has a weight of between 4 and 18 kg, more preferably of between 8 and 15 kg, typically of about 12 kg.

### Brining

The brining time is preferably at least 1 hour, more preferably at least 5 hours. It has been advantageously found that in the course of step (f.), nisin production and/or acidification may progress so that the amount of nisin and/or the pH of the shaped curd mass comprising the sodium chloride content and the nisin content may be further optimised. According to this embodiment, it is especially preferred that the nisin-producing direct vat set culture in step (b.) is mixed with the milk at 10⁹ cfu/ml or less, more preferably at 10⁸ cfu/ml or less. If the nisin-producing direct vat set culture is dosed at a higher inoculation level, said progress of acidification of the shaped curd mass may be impeded.

The brining time is preferably less than 120 hours. In a preferred embodiment, the brining time is less than 60 hours, even more preferably the brining time is less than 40 hours, most preferably the brining time is less than 32 hours or even less than 24 hours. Accordingly, a shaped curd mass comprising a reduced sodium chloride content [and a nisin content] is obtained. Herein, "reduced" means less than 3 wt.%, more preferably between 1-3 wt.%, even more preferably between 1-2.75 wt.%, most preferably between 1.75-2.75 wt.%, based on dry weight of the cheese. The person skilled in the art may preferably adapt the brining time to obtain the reduced sodium chloride content for a shaped curd mass having a different weight and/or shape.

### Ripening

In order to produce a semi-hard or hard cheese, the present method preferably comprises the additional step of ripening the shaped curd mass. In the method to produce the semi-hard or hard cheese, the ripening temperature preferably ranges between 7-22 °C, even more preferably between 12 and 20 °C. Further preferably, the ripening time ranges between 25 and 365 days.

In a preferred embodiment of the method to produce the semi-hard or hard cheese, prior to ripening, the shaped curd mass comprising the sodium chloride content and the nisin content is preferably vacuum-packaged in a foil or so-called shrink bag. A suitable shrink bag is for example commercially available as Cryovac BK3550, Cryovac BK2L, Cryovac BK3950 or Cryovac OSB3550 (*ex* Sealed Air Corp.). The vacuum-packing of the shaped curd mass may for example be suitably performed in a Cryovac OSBC® Rotary Chamber System for rectangular-shape Cheese or Processed Meat Products (ex Sealed Air Corp.). According to this embodiment, a so-called foil-ripened cheese may be provided which may be particularly easily handled and sliced. Foil-ripened cheese is also known as rindless cheese.

In another preferred embodiment of the method to produce the semi-hard or hard cheese, said method further comprises providing the shaped curd mass comprising the sodium chloride content and the nisin content with a water-borne coating composition comprising a polymer which is capable of forming a film. The provision of the coating composition to the shaped curd mass is preferably repeated several times during the ripening time, preferably followed by turning the cheese. According to this embodiment, a natural-ripened semi-hard or hard cheese may be obtained which may have an especially favourable taste and/or flavour and/or texture. According to this embodiment, it is especially preferred that the ripening conditions further comprise a relative humidity of between 75 and 95%, more preferably of between 80 and 90%. It is especially preferred that the water-borne coating composition is provided according to a coating protocol for natural-ripened Gouda cheese, which is known to the person skilled in the art. A suitable water-borne coating composition comprising a polymer which is capable of forming a film may be commercially available, for example as Ceska WL (ex CSK Food Enrichment), a water-borne coating composition comprising an emulsion copolymer of vinyl acetate with di-n-butylmaleate. However, other water-borne coating compositions comprising a polymer which is capable of forming a film may also be employed, for example poly(hydroxy alkanoate)-based water-borne coating dispersions, protein-based water-borne coating dispersions, coating compositions comprising an emulsion copolymer of vinyl acetate and ethylene or water-borne coating compositions comprising acrylate emulsion homo- or copolymers.

### Cheese

The semi-hard or hard cheese obtainable by ripening of the shaped curd mass comprising the sodium chloride content and the nisin content is preferably a Gouda-type cheese. It has been favourably found that the present method for producing the semi-hard or hard cheese may provide a Gouda-type cheese having a clean, rich flavour. In a preferred embodiment, the cheese comprises a fat content of between 5 and 35 wt.% based on dry weight of the cheese. Additionally or alternatively, the semi-hard or hard cheese is foil-ripened. In another preferred embodiment, the semi-hard or hard cheese is natural ripened. Said natural-ripened cheese may preferably be waxed, for example with a layer of a suitable paraffin wax. A waxed natural-ripened cheese may be handled more easily. Advantageously, a wax layer may favourably adhere to the natural-ripened semi-hard or hard cheese, since blowing of the cheese, especially due to contamination by *Propionibacterium* spp. and/or *Clostridium* spp., may be prevented, as outlined above.

The semi-hard or hard cheese obtainable according to the present method comprises a nisin content of at least 10 IU/g of the cheese. These lower ranges favourably pertain to a aged, a semi-aged and a young semi-hard or hard cheese, respectively. Herein, a young cheese is a shaped curd mass comprising a sodium chloride content and a nisin content which has been ripened for 4-8 weeks after salting; a semi-aged cheese is a shaped curd mass comprising a sodium chloride content and a nisin content which has been ripened for 2-6 months after salting, and an aged cheese is a shaped curd mass comprising a sodium chloride content and a nisin content which has been ripened for 6-10 months after salting. The presence of nisin in the cheese, however low its concentration may be, may be indicative of its having been continually protected during ripening.

It has been observed that the nisin content comprised by the shaped curd mass comprising the sodium chloride content and the nisin content may decline during ripening. This rate of decline may be experimentally determined without inventive effort. The desired nisin content of the shaped curd mass containing the sodium chloride content and the nisin content may then be calculated, for being able to obtain a cheese having a certain desired ripening time and a certain desired minimum nisin content. The cheese preferably comprises a nisin content of preferably less than 1200 IU/g, more preferably less than 800 IU/g of cheese.

It is noted that the semi-hard or hard cheese comprising the sodium chloride content and the nisin content may further comprise a nitrate; said cheese may alternatively or additionally comprise lysozyme. Semi-hard or hard cheese, especially Gouda-type cheese, is usually industrially produced by a method employing a step wherein the (preferably cut) curds are washed, preferably in the presence of a nitrate salt and/or lysozyme. Additionally or alternatively, the nitrate salt and/or the lysozyme may be added to the cheese milk composition in (b.). It is remarked that the nitrate salt may, during ripening, be partly or fully converted into one or more nitrate metabolites. Thus, the term "a nitrate" may read as an added nitrate salt and/or one or more metabolites of the added nitrate salt. In one embodiment the present semi-hard or hard cheese comprises between 1 and 100 mg nitrate per kg cheese, and/or between 0.01 and 5 mg of a nitrate metabolite per kg cheese, wherein the nitrate metabolite is preferably a nitrite. Additionally or alternatively, the semi-hard or hard cheese may preferably comprise between 0.1 and 50 mg of lysozyme per kg cheese. As noted above, such a cheese, especially a semi-hard or hard cheese comprising a sodium chloride content between 1-3 wt.% may still not be sufficiently protected unless nisin is present. Thus, in one embodiment, a semi-hard or hard cheese is provided, the semi-hard or hard cheese comprising a sodium chloride content and a nisin content, wherein the sodium chloride content ranges between 1 and 3 wt.% based on dry weight of the cheese, and wherein the cheese further comprises a nitrate and/or lysozyme. In another embodiment, the semi-hard or hard cheese comprising the sodium chloride content and the nisin content is essentially free of a nitrate and/or of lysozyme.

In another embodiment, it may be preferred that the semi-hard or hard cheese comprises a nisin content of less than 1200 IU/g, more preferably of less than 800 IU/g of the cheese, yet more preferably less than 600 IU/g, even more preferably less than 400 IU/g of the cheese. The presence of nisin in large quantities may be undesirable. Preferably, the semi-hard cheese comprises a nisin content between 2 and 800 IU/g of the cheese, more preferably between 4 and 600 IU/g, most preferably of between 10-600 IU/g or of between 10-300 IU/g of the cheese.

The semi-hard or hard cheese may preferably further comprise a bacterial surface flora. The bacterial surface flora preferably comprises a "smear culture" which favourably comprises one or more subspecies of *Corynebacterium* or *Brevibacterium.* Additionally or alternatively, a preferred semi-hard or hard cheese obtainable by ripening of the shaped curd mass comprising the sodium chloride content and the nisin content is selected from the group consisting of Gruyere, Tilsit, and Raclette.

The cheese is preferably not of the Maasdammer or Emmental type, as this type of cheese is produced using *Propionibacterium* spp., which have been found to be inhibited or killed in the presence of the nisin-producing direct vat set culture.

The cheese preferably comprises 100 ppm or less, more preferably 50 ppm or less of propionic acid. Additionally or alternatively, the cheese preferably comprises 100 ppm or less, even more preferably 50 ppm or less of butyric acid.

Where appropriate, the advantages pertaining to the cheese may also pertain to the shaped curd mass comprising the sodium chloride content and the nisin content.

### Other aspects

In the method to produce the shaped curd mass comprising the sodium chloride and the nisin content, steps (a.) and (b.) may be favourably combined with the steps of
c. allowing the cheese milk composition to coagulate to provide curds;
d. optionally, washing the curds;
e. pressing the curds to produce a shaped curd mass;
f. salting the shaped curd mass in brine to produce the shaped curd mass comprising the sodium chloride content and the nisin content.

### EXAMPLES

**Determination of nisin activity.** Nisin activity is determined based on a bioassay agar method with Micrococcus flavus as indicator strain (Bouksaim et al., 2000; Effects of mixed starter composition on nisin Z production by L. lactis subsp. lactis biovar. diacetylactis UL 719 during production and ripening of Gouda cheese. International J. of Food Microbiol. 59, 141-156). The activity of nisin is expressed in IU, in which 40 IU corresponds with 1 µg of pure nisin.

**Determination of nisin intolerance of four different undefined bulk starters.** The following mother cultures were selected: Bos, A, HB-26 and Fr18. These cultures may be commercially obtained from CSK Food Enrichment; the mother cultures are commercially supplied at 10¹⁰ cfu/ml or higher. Each of the mother cultures was diluted 40 times before use.
Each of the diluted mother cultures were inoculated in high pasteurised milk at 0.5 wt.% with respect to the weight of the milk, and the milk was fermented for 17 hours at 20.5 °C, to provide 4 different freshly prepared bulk starters.
To test for nisin tolerance of the bulk starters, Nilac milk was prepared and divided in 16 bottles of 100 ml. For each of the 4 different types of bulk starter, 1 wt.% of each type of freshly prepared bulk starter, with respect to the weight of the milk, was added to 4 bottles. To each of the bottles nisin was added, at 0, 10, 25, and 50 IU per ml, respectively. The 16 bottles were then incubated at 30°C during 20h; during incubation, acidification of the milk was measured by pH-measurement (results not shown).

It was found that each of the bulk starters, in the presence of nisin at 10 units per litre or more, was incapable of reducing the pH of the milk by 1 pH unit or more during incubation of the milk for 6 hour at a temperature of 30 °C. However, each of said bulk starters, during incubation of the milk for 6 hour at a temperature of 30 °C in the absence of added nisin, was capable to reduce the pH of the milk by 1 pH unit or more.

Thus, each of the commercially available undefined bulk starters is a nisin-intolerant bulk starter according to the invention.

### Cheese making experiment A.

Flat-cylindrical Gouda-type cheeses of about 12 kg were prepared using a 700 litre curd preparer according to the method to produce the semi-hard or hard cheese comprising the sodium chloride content and the nisin content. More specifically, a typical Gouda recipe was followed in the preparation of the cheese, see, for example, Fox P.F. (ed) in Cheese: Chemistry, Physics and Microbiology, 3rd. Ed., vol. 2, "Gouda and Related Cheeses", pp. 101-140. Herein, the following parameters were set:
- amount of coagulant (Kalase, a calf rennet *ex* CSK Food Enrichment): about 20 ml / 100 litre of milk
- protein/fat ratio of the milk: 0.54
- lactose content of the milk: 4.3%
- protein content of the milk: 3.4%
- type of nisin-intolerant bulk starter: Bos, *ex* CSK Food Enrichment
- type of nisin-producing direct vat set starter: D100 (directly added to the milk as frozen pellets, the culture is obtainable from CSK Food Enrichment).
- renneting temperature: about 30 °C
- renneting time: about 25 min.
- whey drainage: about 40%
- curds were washed in step (d.)

The milk was inoculated with propionibacteria at 10³ cfu/ml, to simulate a contamination with such bacteria in an industrial cheese making environment. The effect of the following variables was studied, cf. Table 1.

**Table 1. Variables in cheese making experiment A.**

| **Factor** | **Unit** | **Levels** | | | | |
|---|---|---|---|---|---|---|
| Amount of Bos added in step (b.) | liter / 700 liter | 2.3 | 3.5 | | | |
| Amount of D100 added in step (b.) | gram / 700 liter | 0 | 12.5 | 25 | 50 | 100 |
| Brining time | Hour | 20 | 40 | | | |

The shaped curd masses after salting (i.e. following step (f.) were analysed and further ripened for 9 and 16 weeks at a temperature of between 12 and 20 °C and at a relative humidity of between 80 and 90%, whilst receiving a treatment with a water-borne cheese coating composition (Ceska WL, *ex* CSK Food Enrichment) at regular intervals (natural ripening).

### Results.

### Salt content, propioni contamination, effect of nisin.

The average salt content of a shaped curd mass obtained after a brining time of 20 hours was about 2.5 wt.% with respect to the weight of the cheese, calculated as dry matter. The average salt content of a shaped curd mass obtained after a brining time of 40 hours was about 3.5 wt.% with respect to the weight of the cheese, calculated as dry matter. In the absence of the nisin-producing direct vat set culture D100, cheeses having a salt content of about 2.5% contained big holes and appeared blown up after 16 weeks of ripening. The cheeses having a salt content of about 3.5% also contained holes, but smaller ones and these cheese were less badly affected.

In the presence of D100 at any levels, no blowing or unwanted hole formation in the cheese was observed, indicating that the propionibacteria had been completely inhibited or even killed. All these cheeses were of at least acceptable quality.

### Acidication of and nisin production in a shaped curd mass just before and directly after salting (step (f.)).

For the Bos level of 2.3 liter per 700 litre of milk, the nisin content of the shaped curd mass after salting (i.e. following step (f.) ranged from about 40 IU/g (for a D100 dosage of 12.5 g/700 litre) to about 540 IU/g (for the highest dosage of D100). For the Bos level of 3.5 liter per 700 litre of milk, the nisin content of the shaped curd mass after salting (i.e. following step (f.) ranged from about 10 IU/g (for a D100 dosage of 12.5 g/700 litre) to about 300 IU/g (for the highest dosage of D100).

For the Bos level of 2.3 liter per 700 litre of milk, the pH of the shaped curd mass BEFORE salting (i.e. just before step (f.) ranged from about 5.65 (in the absence of added D100) to about 5.8 (for the highest dosage of D100). For the Bos level of 3.5 liter per 700 litre of milk, the pH of the shaped curd mass BEFORE salting (i.e. just before step (f.) was on average 0.1 pH unit lower than for the Bos level of 2.3 liter per 700 litre.

In the present Example, optimal results regarding nisin production in and acidification of the shaped curd mass were obtained for the Bos level of 3.5 liter per 700 litre of milk (i.e. 0.5 wt.% of the nisin-intolerant bulk starter) and at around 25-50 g of D100 per 700 litre of milk (corresponding at an inoculation density of the milk in step (b.) with the nisin-producing direct vat set culture of about 3*10⁵ - 7*10⁵ cfu/ml, given that D100 is supplied at about 10¹⁰ cfu/g).

The nisin content in a shaped curd mass after salting (i.e. following step (f.) and of a natural ripened cheese obtained by ripening of said shaped curd mass for 16 weeks (Gouda-type ripening protocol), for the Bos-dosage of 2.3 liter are summarized in Table 2.

It is noted that in this Example, culture D100 may be replaced with TC-17 (ex CSK Food Enrichment), and very similar results will be obtained.

**Table 2. Nisin content and moisture content in a shaped curd mass and in a 16-weeks natural-ripened cheese, for the Bos-dosage of 2.3 litre per 700 liters of milk.**

| Dosage of D100 (g/7001) | 12.5 | | 25 | | 50 | | 100 | |
|---|---|---|---|---|---|---|---|---|
| Ripening time (weeks)* | 0 | 16 | 0 | 16 | 0 | 16 | 0 | 16 |
| Nisine content (IU/g) | 41 | 4 | 186 | 9 | 385 | 15 | 541 | 65 |
| Moisture content (wt.%) | 52.1 | 43.1 | 53 | 42.3 | 54.1 | 42.8 | 51 | 41.5 |
| (*) 0 weeks corresponds to a shaped curd mass after salting (i.e. following step (f.) | | | | | | | | |

The results of Table 2 show that the nisin content declines during ripening. However, as mentioned above, the cheeses remain protected against possible adverse effects of the propionibacteria. This indicates that very small amounts of nisin in the cheese may be sufficient to keep the cheese protected, at least against propionibacteria.

## Claims

1. A method to produce a shaped curd mass comprising a nisin content and a sodium chloride content from a cheese milk composition, the method comprising
a. providing a nisin-intolerant bulk starter; and
b. mixing milk, a coagulant, the nisin-intolerant bulk starter, and a nisin-producing direct vat set culture in an amount of at least 1.0^{∗}10⁵ cfu/ml of the milk, to provide the cheese milk composition;
wherein the nisin-producing direct vat set culture still experiences a lag time after said mixing, and/or
wherein the nisin-producing direct vat set culture is supplied as a lyophilized or a frozen culture, and
wherein the nisin content comprised by the shaped curd mass is at least 10 IU/g.

2. The method according to claim 1, wherein the nisin-producing direct vat set culture is employed in (b.) in an amount of 1.0^{∗}10⁵ -1.0^{∗}10⁷ cfu/ml of the milk.

3. The method according to any one of the preceding claims, wherein the nisin-producing direct vat set culture is employed in (b.) in an amount of less than 200 g of said culture per 1000 kg of the milk.

4. The method according to any one of the preceding claims, wherein the nisin-intolerant bulk starter is provided in an amount of 0.1-2 wt.% with respect to the weight of the milk.

5. The method according to any one of the preceding claims, wherein the nisin-intolerant bulk starter is provided in an amount of 0.3 - 0.8 wt.% with respect to the weight of the milk.
**1.** A method to produce a shaped curd mass comprising a nisin content and a sodium chloride content from a cheese milk composition, the method comprising
a. providing a nisin-intolerant bulk starter; and
b. mixing milk, a coagulant, the nisin-intolerant bulk starter, and a nisin-producing direct vat set culture in an amount of at least 1.0^{∗}10⁵ cfu/ml of the milk, to provide the cheese milk composition;
wherein the nisin-producing direct vat set culture still experiences a lag time after said mixing, and/or
wherein the nisin-producing direct vat set culture is supplied as a lyophilized or a frozen culture, and
wherein the nisin content comprised by the shaped curd mass Is at least 10 IU/g.
**2.** The method according to claim 1, wherein the nisin-producing direct vat set culture is employed in (b.) in an amount of 1.0^{∗}10⁵ -1.0^{∗}10⁷ cfu/ml of the milk.
**3.** The method according to any one of the preceding claims, wherein the nisin-producing direct vat set culture is employed in (b.) in an amount of less than 200 g of said culture per 1000 kg of the milk.
**4.** The method according to any one of the preceding claims, wherein the nisin-intolerant bulk starter is provided in an amount of 0.1-2 wt.% with respect to the weight of the milk.
**5.** The method according to any one of the preceding claims, wherein the nisin-intolerant bulk starter is provided in an amount of 0.3 - 0.8 wt.% with respect to the weight of the milk.

6. The method according to any one of the preceding claims, wherein the nisin-intolerant bulk starter comprises a nisin-intolerant mesophilic mixed strain bulk starter, which is preferably suitable for Gouda cheese.

7. The method according to any one of the preceding claimswherein step (b.) further comprises the addition of a flavour adjunct culture to the milk.

8. The method according to claim 7, wherein the flavour adjunct culture is a defined multiple-strain culture.

9. The method according to any one of claims 7-8, wherein the flavour adjunct culture is a thermophilic flavour adjunct culture.

10. The method according to any one of claims 7-9, wherein the flavour adjunct culture comprises one or more strains of *Lactobacillus acidophilus* and/or of *Lactobacillus helveticus,* either alone or in combination.

11. The method according to one of the preceding claims, wherein the brining time is 32 hours or less.

12. A method to produce a semi-hard or hard cheese comprising ripening the shaped curd mass obtained in the method as defined in any one of the preceding claims, wherein said cheese comprises a nisin content of at least 10 IU/g of the cheese.

## Patentansprüche

1. Verfahren für die Herstellung einer geformten Käsebruchmasse mit einem Nisin-Gehalt und einem Natriumchlorid-Gehalt aus einer Käse-Milch-Zusammensetzung, wobei das Verfahren umfasst
a. Bereitstellen einer Nisin-intoleranten Starterkulturmasse; und
b. Mischen von Milch, einem Koagulationsmittel, der Nisin-intoleranten Starterkulturmasse und einer Nisin-produzierenden Direktkesselstarterkultur in einer Menge von wenigstens 1,0^{∗}10⁵ KBE/ml der Milch, um die Käse-Milch-Zusammensetzung bereitzustellen;
wobei die Nisin-produzierende Direktkesselstarterkultur nach dem Mischen noch eine Verzögerungszeit erfährt und/oder
wobei die Nisin-produzierende Direktkesselstarterkultur als eine lyophilisierte oder eine gefrorene Kultur zugeführt wird, und
wobei der von der geformten Käsebruchmasse umfasste Nisin-Gehalt wenigstens 10 IE/g ist.

2. Verfahren nach Anspruch 1, wobei die Nisin-produzierende Direktkesselstarterkultur (b.) in einer Menge von 1,0^{∗}10⁵ - 1,0^{∗}10⁷ KBE/ml der Milch eingesetzt wird.

3. Verfahren nach einem der vorhergehenden Ansprüche, wobei die Nisin-produzierende Direktkesselstarterkultur in (b.) in einer Menge von weniger als 200 g der Kultur auf 1000 kg der Milch eingesetzt wird.

4. Verfahren nach einem der vorhergehenden Ansprüche, wobei die Nisin-intolerante Starterkulturmasse in einer Menge von 0,1 - 2 Gew.-%, bezogen auf das Gewicht der Milch, bereitgestellt wird.

5. Verfahren nach einem der vorhergehenden Ansprüche, wobei die Nisin-intolerante Starterkulturmasse in einer Menge von 0,3 - 0,8 Gew.-%, bezogen auf das Gewicht der Milch, bereitgestellt wird.

6. Verfahren nach einem der vorhergehenden Ansprüche, wobei die Nisin-intolerante Starterkulturmasse eine Nisin-intolerante mesophile Mischstamm-Starterkulturmasse umfasst, welche bevorzugt für Goudakäse geeignet ist.

7. Verfahren nach einem der vorhergehenden Ansprüche, wobei Schritt (b.) weiterhin die Zugabe einer Geschmacksbeigabekultur zu der Milch umfasst.

8. Verfahren nach Anspruch 7, wobei die Geschmacksbeigabekultur eine definierte Mehrstammkultur ist.

9. Verfahren nach einem der Ansprüche 7 - 8, wobei die Geschmacksbeigabekultur eine thermophile Geschmacksbeigabekultur ist.

10. Verfahren nach einem der Ansprüche 7 - 9, wobei die Geschmacksbeigabekultur ein oder mehrere Stämme von *Lactobacillus acidophilus* und/oder *Lactobacillus helveticus,* entweder allein oder in Kombination, umfasst.

11. Verfahren nach einem der vorhergehenden Ansprüche, wobei die Salzlakenzeit 32 Stunden oder weniger ist.

12. Verfahren für die Herstellung eines halbharten oder harten Käses, umfassend das Reifen der geformten Käsebruchmasse, erhalten in dem Verfahren, wie in einem der vorhergehenden Ansprüche definiert, wobei der Käse einen Nisin-Gehalt von wenigstens 10 IE/g des Käses umfasst.

## Revendications

1. Un procédé pour produire une masse de caillé mise en forme, comprenant une teneur en nisine et une teneur en chlorure de sodium, à partir d'une composition de lait de fromagerie, le procédé comprenant
a. la fourniture d'un levain industriel présentant une intolérance à la nisine, et
b. le mélange du lait, d'un agent coagulant, du levain industriel présentant une intolérance à la nisine et d'une culture directe en cuve productrice de nisine en une quantité d'au moins 1,0^{∗}10⁵ cfu/ml de lait, pour obtenir la composition de lait de fromagerie;
dans lequel la culture directe en cuve productrice de nisine donne toujours lieu à un temps de latence après ledit mélange, et/ou
dans lequel la culture directe en cuve productrice de nisine est fournie sous forme de culture lyophilisée ou congelée, et
dans lequel la teneur en nisine que comporte la masse de caillé mise en forme est d'au moins 10 UI/g.

2. Le procédé selon la revendication 1, dans lequel la culture directe en cuve productrice de nisine est utilisée dans (b.) en une quantité de 1,0^{∗}10⁵ à 1,0^{∗}10⁷ cfu/ml de lait.

3. Le procédé selon l'une quelconque des revendications précédentes, dans lequel la culture directe en cuve productrice de nisine est utilisée dans (b.) en une quantité inférieure à 200 g de ladite culture par 1000 kg de lait.

4. Le procédé selon l'une quelconque des revendications précédentes, dans lequel le levain industriel présentant une intolérance à la nisine est fourni en une quantité de 0,1 à 2% en poids par rapport au poids du lait.

5. Le procédé selon l'une quelconque des revendications précédentes, dans lequel le levain industriel présentant une intolérance à la nisine est fourni en une quantité de 0,3 à 0,8% en poids par rapport au poids de lait.

6. Le procédé selon l'une quelconque des revendications précédentes, dans lequel le levain industriel présentant une intolérance à la nisine comprend un levain industriel mésophile mixte présentant une intolérance à la nisine, ce qui convient de préférence pour le fromage Gouda.

7. Le procédé selon l'une quelconque des revendications précédentes, dans lequel l'étape (b.) comprend en outre l'addition au lait d'une culture d'un additif aromatisant.

8. Le procédé selon la revendication 7, dans lequel la culture de l'additif aromatisant est une culture d'une souche multiple définie.

9. Le procédé selon l'une quelconque des revendications 7-8, dans lequel la culture de l'additif aromatisant est une culture d'additif aromatisant thermophile.

10. Le procédé selon l'une quelconque des revendications 7-9, dans lequel la culture de l'additif aromatisant comprend une ou plusieurs souches de *Lactobacillus acidophilus* et/ou de *Lactobacillus helveticus,* soit seules soit en combinaison.

11. Le procédé selon l'une quelconque des revendications précédentes, dans lequel le temps de saumurage est inférieur ou égal à 32 heures.

12. Un procédé pour produire un fromage à pâte dure ou demi-dure, comprenant la maturation de la masse de caillé mise en forme obtenue dans le procédé tel que défini dans l'une quelconque des revendications précédentes, dans lequel ledit fromage comprend une teneur en nisine d'au moins 10 UI/g de fromage.
